# EUROPEAN PATENT APPLICATION

(11) **EP 1 508 401 A1**
(43) Date of publication of application: **23.02.2005**
(21) Application number: 02735432.3
(22) Date of filing: 27.05.2002
(51) Int. Cl.: B23P 19/04, E04F 21/00

(54) **METHOD OF INSERTING A JOINT INTO METAL, PVC OR SIMILAR JOINERY SECTIONS**

(71) Applicant: Vicente Vila, S.L., 46600 Alcira (ES)
(72) Inventor: VILA FERNANDEZ, Juan, José, E-46600 Valencia (ES)
(74) Representative: Sanz-Bermell Martinez, Alejandro
(86) International application number: PCT/ES2002/000252
(87) International publication number: WO 2003/099510

(57) **Abstract**

The invention relates to a method of inserting a joint into metal, PVC or similar joinery sections. The inventive method comprises the following operations: the joint is positioned in a joint supply device, the section is disposed in a joint receiving position, the section parameters are introduced, the end of the joint is cut at a pre-defined angle, the joint is moved towards the section, the second end of the joint is cut and the joint is subsequently moved until it is inserted fully in said section. The invention also relates to a machine for inserting a joint in metal, PVC or similar joinery sections, comprising: a bench, whereon a section is placed; a supply device comprising a groove through which the joint is inserted, said joint being moved under the force of a push device; a device that is used to meter the passage of the joint, comprising rollers; an assembly of shear blades, each blade having a pre-determined cutting direction; and a device for supporting the receiving section and a section release device.

## Description

The object of this invention is a method for inserting a gasket in metal, PVC and similar carpentry profiles, and more specifically a method based on a mechanism allowing the insertion of a rubber gasket or weather strip in carpentry profiles and later cutting or trimming of said gasket.

The closest state of the art is disclosed in ES 2154528, this invention being based on a machine for automatically and continuously inserting a gasket or weather strip in profiles, forming part of a machine bed with a work surface, where the profiles are set out. The machine is activated electronically by insertion of the profile, thanks to a set of photoelectric cells aligned along the bed, which detect the presence of the profile and activate the mechanisms or stop these when the profile has to be removed. A pulling slide is manually activated to insert the weather strip in the gasket holder, moving this along the bed right to the end, where there is an electric brake, which makes it stop and simultaneously activates a cutting device located at the head of the machine, which cuts the gasket or weather strip at a point close to that of the end of the profile where the insertion started.

The gasket is elastic, meaning that when it is pulled along by a pulling slide and braked by an electric brake, after cutting, the length of the gasket gives margins of error, leading to errors when the profiles are assembled.

It is desirable to ensure an accurate cut so as not to have to check the profiles later with the rubber gasket inserted and have to cut off any possible surplus off this, leading to a reduction in costs through avoiding labour in trimming off the end of the gasket, at the same time as improving the quality of the final product.

This invention consists in a method for inserting the gasket in metal, PVC or similar carpentry profiles, which includes a means of predetermining the profile length, means for repairing the end of the rubber gasket or weather strip, means for inserting said gasket in the profile, means for securing the profile and means for ejecting this.

This invention also refers to a machine for inserting gaskets in metal, PVC or similar carpentry profiles, consisting of a machine bed which can be as long as required, depending on the length of the profile, which is set on said bed. The machine is supplied with rolls of gaskets normally placed under the surface of the bed. The machine has a supply or feed device, with a slot through which the gasket is inserted, this gasket being moved by the action of a pushing device, which consists of a drive means. It also has a counting device for the gasket as it goes by consisting of rollers, and a set of cutting blades, each with a pre-set cutting angle. Lastly, said machine also consists of a device for holding the receiving profile and a device for ejecting this.

In order to make the following explanation clearer, six sheets of drawings are adjoined to this description representing the essence of the invention, in which:

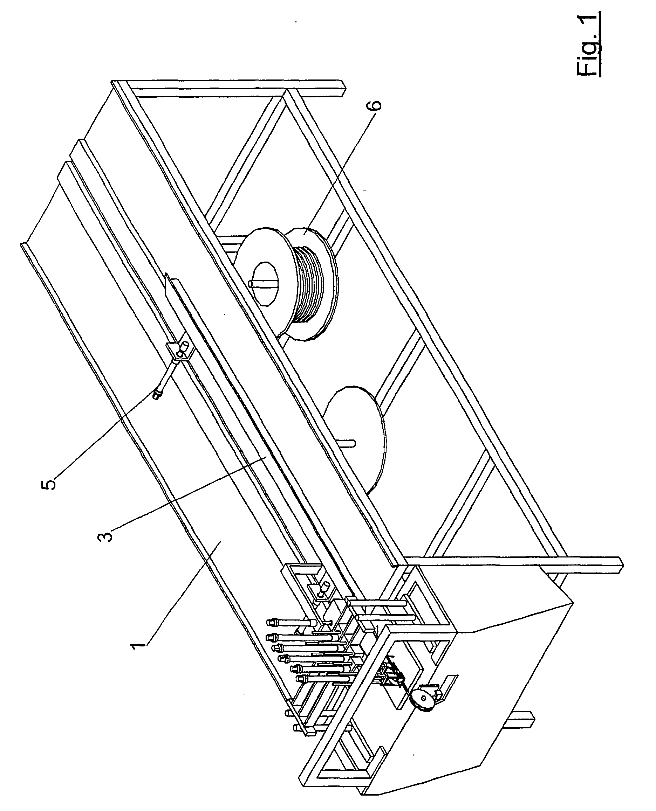

Figure 1 shows a general perspective view of the assembly constituting the object of this invention;

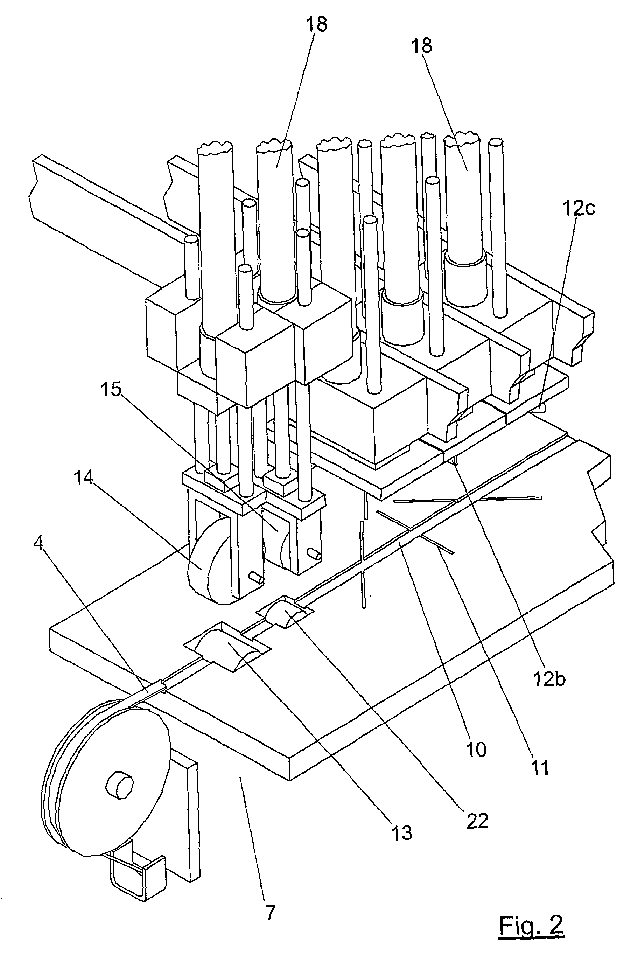

Figure 2 shows a perspective view of the motor device, the counter device and the cutting device;

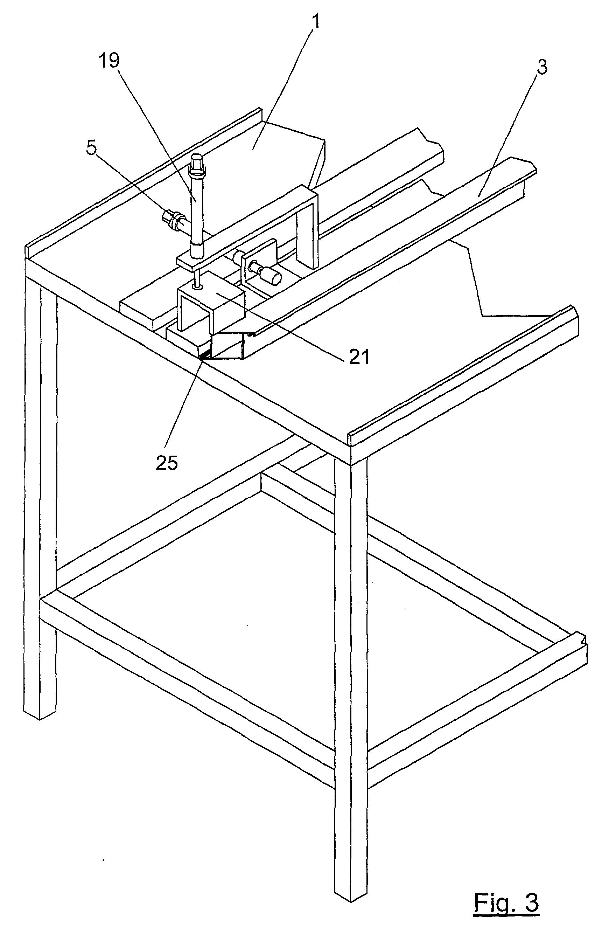

Figure 3 shows a perspective view of the assembly consisting of the profile, the securing means and the means for ejecting this;

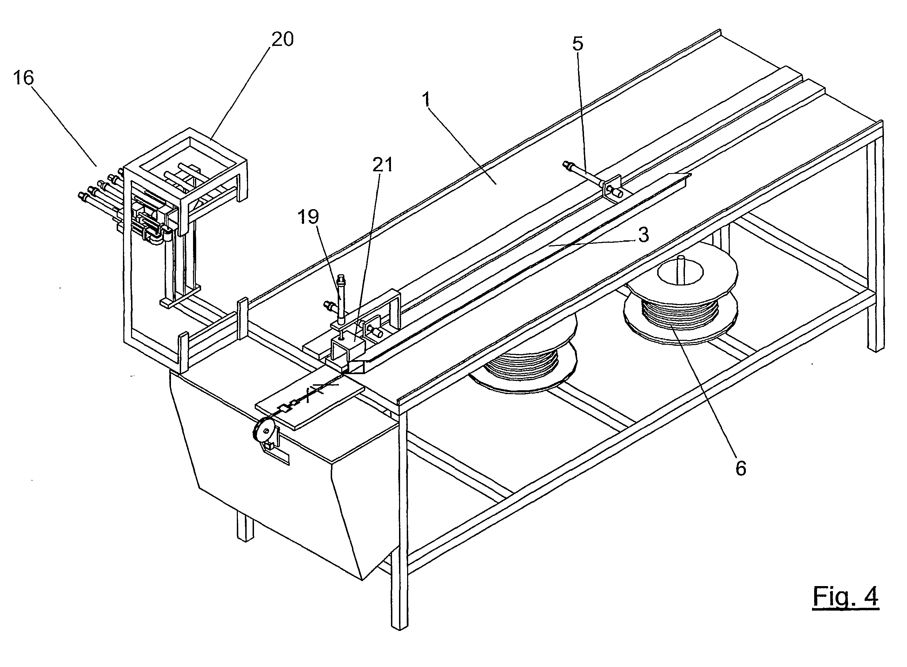

Figure 4 shows a perspective view of the assembly of motor, counter and cutting devices, articulated on a shaft located at one of its ends;

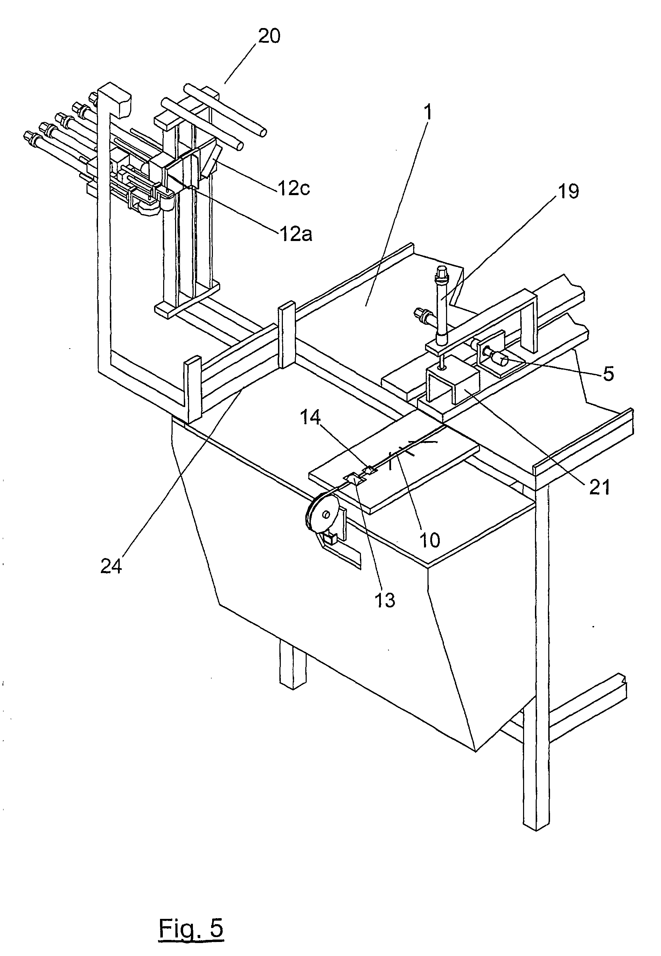

Figure 5 shows a perspective view of the previous figure;

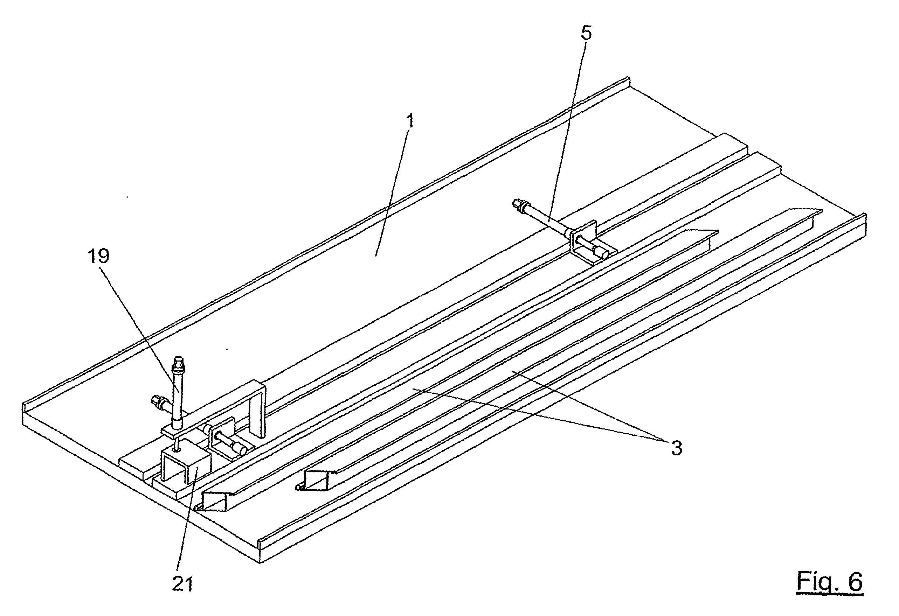

Figure 6 shows a perspective view of the surface of the bed including an ejection device, on which there are several profiles with the rubber gasket inserted.

In these figures we are shown a preferential embodiment, in which 1 represents a machine bed longitudinally designed to take any size of profile 3, in which the rubber gasket 4 is inserted, and sufficiently wide to house a set of profiles after being pushed by an ejection device 5 consisting in pneumatic pushing devices for the profile 3, after inserting and cutting the gasket 4. This gasket comes from rolls of gasket 6, which are set under the bed 1.

7 shows a supply device fitted with a slot 10 in which the gasket 4 is inserted, and along which it moves thanks to a gasket pushing device 13, 14, consisting of a drive means. This pushing device consists of at least one drive roller 13, which cooperates with a second drive roller 14, which presses against the first, meaning that the gasket 4 is trapped.

Measurement of gasket displacement is done by means of a counting device gauging the gasket as it passes by 15, 22, formed of at least one counter roller or encoder 22, which cooperates with a second pressure roller 15.

12a, 12b and 12c show a set of cutting blades, one for each of the pre-set cutting angles, normally at 45° from the longitudinal axis of the profile, transversal to this or at -45°. This set of cutting blades cooperates with slots 11 set opposite to that of the gasket 4.

21 represents a device for holding the profile, consisting in a clamp driven by pneumatic means 19.

16 is one of the parts of the motor, counter and cut device assembly, which is able to be raised by pneumatic means 18. This part 16 is set on a body able to be articulated 20, on a shaft 24, which is set on a plane parallel to the gasket feeding line.

The method for inserting a gasket in profiles includes the following stages:

First of all the gasket 4 is set on the gasket supply device 7, then the profile 3 is placed in a gasket reception position, in which a reception slot 25 is placed aligned with the supply device 7; then the parameters of the profile are entered, these parameters being the maximum length of the profile, and the angles which form the ends against the longer members; then the cut is made at the end of the gasket 4 in accordance with the angle of the corresponding end of the profile 3 and the gasket is moved towards the profile to cut the second end at the pre-set angle. Then the gasket is pushed until being fully inserted into the reception profile and lastly, after inserting the gasket 4 in profile 3, this is ejected by the ejection device 5, fitted on the bed 1, on a plane perpendicular to profile 3.

In alternative embodiments, both the motor device and the cutting device or pushing device can be driven by means other than pneumatic ones, such as manual or other systems.

For any due purposes it is hereby stated that the nature of the invention is not restricted to the exact details of this description, any modifications which do not affect the essence, what is expressed and relative to this patent not altering said nature.

This item is for industrial application in making metal, PVC or similar profiles, with a rubber gasket or weather strip inserted.

## Claims

1. Method for inserting gaskets in metal, PVC and similar carpentry profiles, **characterised by** including the following operations; setting the gasket in a gasket supply device; placing the profile in a gasket reception position, in which a reception slot (25) is aligned with the supply device (7); introduction of the profile parameters, these parameters being the maximum profile length and the angles that form the ends against the longer members; cutting the end of the gasket to match the angle of the corresponding end of the profile; moving the gasket towards the profile along the insertion slot included in this, a distance equal to the length of the profile, adding or subtracting the distance to the cutting blade corresponding to the angle at the other end; cutting the second end with the pre-set angle; pushing the gasket until the whole profile is inserted in the reception profile;

2. Method according to claim 1, **characterised in that** the cutting is done in a zone prior to the insertion zone, in the profile feeding direction in said insertion process.

3. Method according to claims 1 and 2, **characterised in that** the cutting is done by means of different blades (12a, 12b and 12c) set at the pre-set angles that the profile may require at its ends.

4. Method according to claim 1, **characterised in that** it has a multiple gasket feeder, allowing one or another feeding channel to be selected automatically or manually.

5. Method according to claim 1, **characterised in that** the measurement of gasket displacement is done by means of an encoder (22).

6. Method according to claim 1, **characterised in that** the motor device is linked to a drive roller so that the gasket is trapped and pushed in combination with a second roller set at the opposite side of said drive roller.

7. Method according to claims 1 to 3, **characterised in that** the blades (12a, 12b, 12c) are driven by pneumatic means.

8. Machine for insertion of gaskets in metal, PVC and similar carpentry profiles, said profiles being provided with an insertion slot for the gasket, **characterised by** having: a bed (1) for supporting the profiles, in which at least one position for profile (3) location in the insertion position is defined; at least one gasket (7) feeding device provided with a slot (10) in which the gasket is inserted and along which this moves by the action of a pushing device (13, 14); a pushing device (13, 14) for the gasket consisting in a motor means, normally from a gasket (6) roll, with reversible movement; at least one device for counting (15, 22) the gasket passing by; at least one set of cutting blades (12a, 12b, 12c), one for each of the pre-set cutting angles, normally coinciding with each of the angles of the profile ends; at least one securing device (21) for the profile to be inserted; and a device for controlling the forward or backward movement of the gasket.

9. Method according to claim 8, **characterised in that** it also includes a central processing unit for storing the profile parameters and receiving the parameters of the profile in use.

10. Method according to claim 8, **characterised in that** the pushing device is formed by at least one drive roller (13) which cooperates with a second drive roller (14) or not, pressing against the first.

11. Method according to claim 8, **characterised in that** the counting device consists of at least one counter roller or encoder (22) which cooperates with a second pressure roller (15).

12. Method according to claim 8, **characterised in that** the cutting blades (12a, 12b, 12c) cooperate with corresponding slots (11) set in the opposite side of the gasket (4).

13. Machine, according to claims 8 and 10 to 13, **characterised in that** one of the parts of the set of motor, counter and cutting assembly (16) can be raised by pneumatic, manual or other means.

14. Machine according to claim 8 and 10 to 14, **characterised in that** one of the parts of the motor, counter and cutting device assembly (16) is set on a body that can articulate (20) on an axis (24) preferentially parallel to the gasket supply line and sufficiently far from said axis, allowing access for maintenance and insertion of the gasket (4) in the slot (10) provided for this purpose.

15. Machine, according to claim 8, **characterised in that** the profile securing device (21) consists of a moveable clamp or rod driven by pneumatic means (19).

16. Method according to claim 8, **characterised in that** it also includes at least one ejection device (5) and preferentially at least two, consisting of pneumatic devices for pushing the profile (3) after inserting and cutting the gasket (4), the pushing distance being sufficient to release the insertion position of a new profile.

17. Machine, according to claims 8 and 16, **characterised in that** the bed (1) is wide enough to house a set of profiles after these are pushed by the ejection device (5).
